Europäisches Patentamt

European Patent Office

Office européen des brevets

(11) Publication number: **0 314 789**
**A1**

## (12) EUROPEAN PATENT APPLICATION

published in accordance with Art. 158(3) EPC

(21) Application number: **87904728.0**

(22) Date of filing: **17.07.87**

Data of the international application taken as a basis:

(86) International application number:
**PCT/JP87/00513**

(87) International publication number:
**WO88/00689 (28.01.88 88/03)**

(51) Int. Cl.³: **G 01 K 1/02**
**G 01 K 7/00, G 01 D 9/08**

(30) Priority: **23.07.86 JP 171750/86**

(43) Date of publication of application:
**10.05.89 Bulletin 89/19**

(84) Designated Contracting States:
**BE CH DE FR GB IT LI NL SE**

(71) Applicant: **Terumo Kabushiki Kaisha**
**No. 44-1, Hatagaya 2-chome Shibuya-ku**
**Tokyo 151(JP)**

(72) Inventor: **YOSHINAKA, Yasuhiro**
**Terumo Kabushiki Kaisha Fujimiryo 2517, Ohmiya**
**Fujinomiya-shi Shizuoka-ken 418(JP)**

(74) Representative: **Henkel, Feiler, Hänzel & Partner**
**Möhlstrasse 37**
**D-8000 München 80(DE)**

(54) ELECTRONIC THERMOMETER PROVIDED WITH BUILT-IN PRINTER.

(57) An electronic thermometer provided with a built-in printer mechanism detects the temperature of a living body at a predetermined period and generates temperature data that represents the temperature, and further forms records of a temperature scale that corresponds to a measurement range and records of a scale of measuring time from a moment the measurement is started. The electronic thermometer further forms records consisting of dots of temperature data generated by said temperature measuring means at corresponding positions on a coordinate specified by the records of the scale of measuring time and the scale of temperature, and then prints out the records thus formed according to a predetermined sequence.

*F I G. 1*

Croydon Printing Company Ltd.

TITLE MODIFIED
see front page

0314789

<u>TITLE OF THE INVENTION</u>

<u>Electronic Clinical Thermometer equipped with Printer</u>

<u>TECHNICAL FIELD</u>

This invention relates to an electronic clinical thermometer equipped with printer which facilitates evaluation by automatically recording a multiple number of body temperature data which are generated in correspondence with elapse time.

<u>BACKGROUND OF THE INVENTION</u>

Up to the current time, electronic clinical thermometers, especially, in deep body thermometers recorded by analog means, the deep body temperature measured output was recorded by an analog recorder externally connected. But according to this type of analog method, for example, there was a problem with offset voltage, etc. It is difficult to convey the correct body temperature data to the user. Also, since it is divided into two parts, a body temperature measuring unit and recording unit, and the two units are connected by a cable, there is also a problem with space utilization.

-1-

DISCLOSURE OF THE INVENTION

This invention is made in consideration of the above mentioned drawbacks of the current technology. The object of the invention is to present an electronic clinical thermometer equipped with a printer which records automatically, in an easy to understand manner, multiple measured temperature data which are generated with elapse time, for example, on white paper by making the electronic clinical thermometer and printer as a single unit.

The other object of the present invention is to provide an electronic clinical thermometer equipped with a printer which outputs the measured temperature on corresponding positions on the coordinates which is formed by the both scales of measurement time and temperature.

The further object of this invention, based on the electronic clinical thermometer and printer being a single, unit, is to prevent the influence of measurement differences caused by the offset electronic potential change.

According to the present invention, the foregoing and other objects are attained by providing an electronic clinical thermometer equipped with a printer comprising:

a temperature measurement means for detecting living body temperature data;

a first recording data producing means for producing temperature scale data over the measurement range which is covered by the temperature measurement means;

a second recording data producing means for producing time scale based on the measurement time which begins at the measurement starting time;

a third recording data producing means for producing temperature data by dots generated by said temperature measurement means, and

plotting means for plotting the generated by the third recording data producing means on coordinates specified by the measurement time scale and temperature scale; and

recording means for printing at least above-mentioned three data in a given sequence.

a second recording data producing means for producing time scale based on the time data of the measurement starting time,

a third recording data producing means for producing temperature data by dots of temperature data generated by the temperature measurement means on corresponding positions of every temperature data of the previously formed measurement time scale and temperature scale coordinates, and,

recording means for printing at least above-mentioned three data in a given sequence.

In another aspect of the present invention, an electronic clinical thermometer equipped with a printer, further comprises:

recording data generating means which generates temperature data in a form of numerical data, whereby the generated temperature data is periodically printed.

In a further aspect of the present invention, an electronic clinical thermometer, further comprises:

memory means for storaging therein data of the measurement time scale, temperature scale and measurement temperature, and control means to determine the time of printing out the data storaged in the memory, whereby at least above three data are printed together when a given time elapses from memory starting time thereof.

Other features and advantages of the invention will be apparent from the following description taken in conjunction with the accompanying drawings in which like reference characters designate the same or similar parts throughouts the figures thereof.


BRIEF DESCRIPTION OF THE DRAWINGS


Fig. 1 is an oblique view of an embodiment of an electronic clinical thermometer equipped with a printer according to the present invention;

Fig. 2 (a) is a front view of the electronic clinical thermometer equipped with a printer shown in Fig. 1.

Fig. 2 (b) shows the rear view of a printer-equipped electronic clinical thermometer shown in Fig. 2 (a).

Figs. 3 (a) and (b) are a general block diagram of the electronic clinical thermometer equipped with a printer shown in Fig.1.

Fif. 4 is an embodiment example of the power on process routine sequence flow chart.

Figs. 5 (a) and (b) show an embodiment of the printer process routine sequence flowchart.

Fig. 6 is a print sample of a record data shich is gathered by an electronic clinical thermometer placed in a thermostatic bath.

Figs. 7 (a) and (b) show an sample depicting the progress of the measurement.

## PREFERRED EMBODIMENT OF THE INVENTION

Hereinafter according to the attached drawings in the appendix, the electronic clinical thermometer equipped with a printer, an embodiment of this invention, is explained in detail.

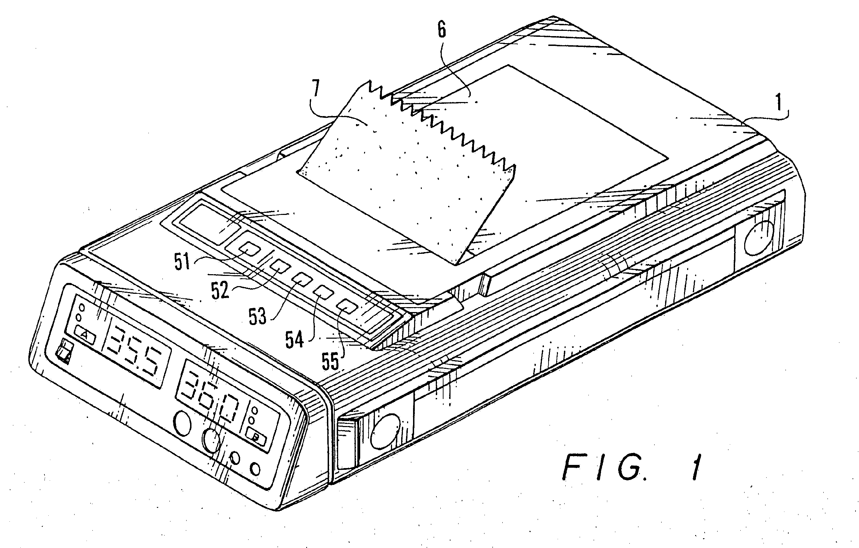

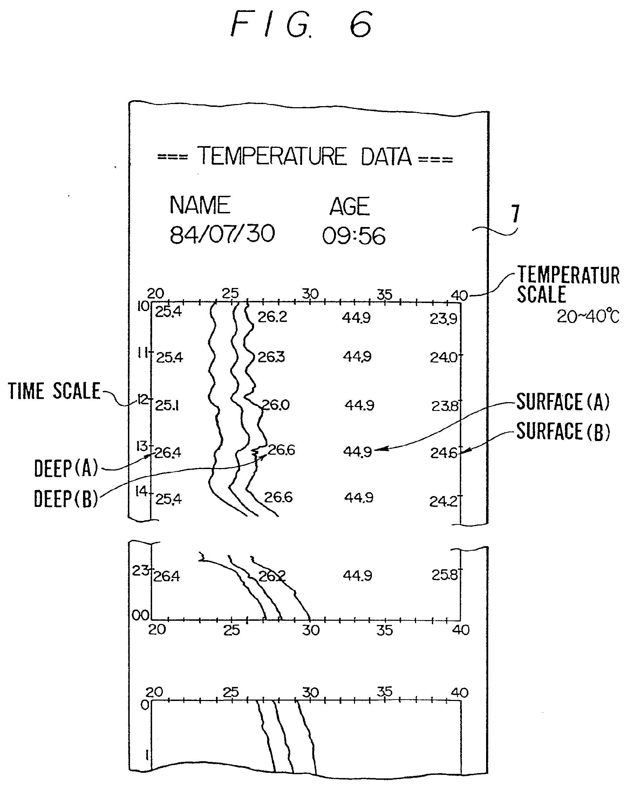

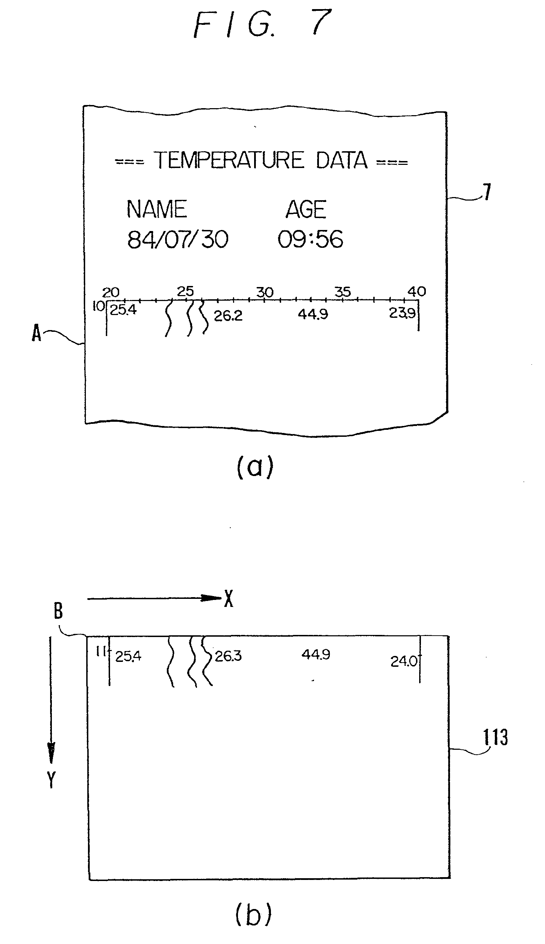

Fig. 1 is the embodiment of this invention showing the external oblique view of a printer-equipped electronic clinical thermometer. In Fig. 1, 1 is the enclosure for accommodating a printer-equipped electronic clinical thermometer, 6 is the internally installed printer which prints electronic clinical thermometer data like those shown in Fig. 6, and 7 is the printer paper, such as white paper.

In Fig. 6, the graph does not show color, but actually, for example, for the deep temperature probes A, B and surface temperature probes A, B, a different color is used to plot the graph with respect to each value. Also, as explained later, in record mode (2), as in Fig. 6, the graph is separated at 0 o'clock (midnight). In record mode (1), the graph is not separated.

On the top surface of the enclosure 1, various control

-5-

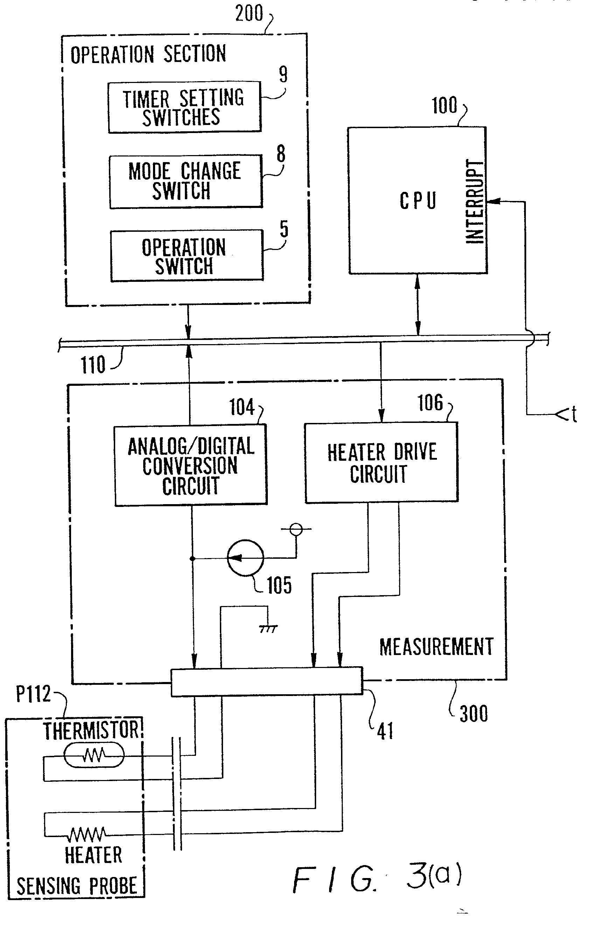

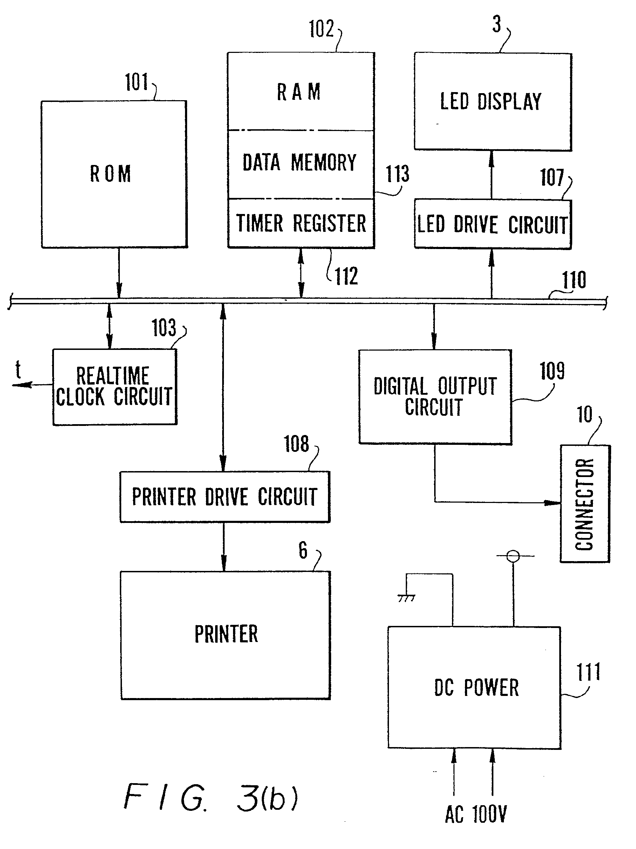

switches to operate the printer are located. These switches give orders to the processor 100 of Fig. 3 (a) which will be explained later. According to a program in ROM 101 of Fig. 3 (b), they control the actions to be performed by CPU 100. 51 in Fig. 1 is a memory mode switch. When this memory mode switch is pushed, the printing of realtime (prints at the same time as the generation of temperature data) print data by printer 6 is stopped, and instead, storage of the print data (for example, plot pattern data for printing) into memory is started. If the memory mode switch 51 is pushed again, the print data stored until that time is continuously printed out. But if during the operation explained above, the memory mode switch is left as is, after 12 hours, the stored data is automatically printed. 52 is the paper feed switch. When this paper feed switch is pressed, the paper 7 is fed. 53 is the pen exchange switch. If the pen exchange switch 53 is activated, the print head moves to the right margin (viewed from the front). Only in this position, it is possible to change the pen. After changing the pen, if the paper feed switch 52 is pushed, the print head returns to its former position. 54 is the marker switch. If this switch is pressed, it causes the printing of the mark [--] on the margin of the recording paper 7, and feeds the paper continuously for 60mm. If the operator enters any comments and pushes the marker switch 54 again, the print head returns to its previous position. If it is left as is without pushing the marker switch 54 after entering comments (comments are not always necessary), the print head returns automatically to its previous position after one minute. 55 is the memo switch. When this memo switch is pressed, 60mm of paper is fed. If the operator enters any comment and presses the memo switch 55 again, the print head returns to its previous position. Also, if after entering comments the memo switch is not pressed and left alone, the print head will return to its previous position after one minute.

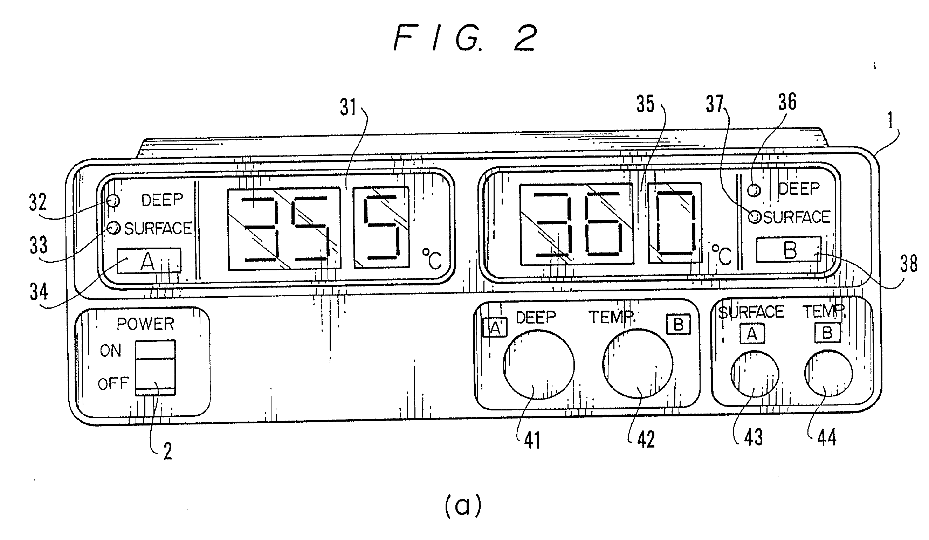

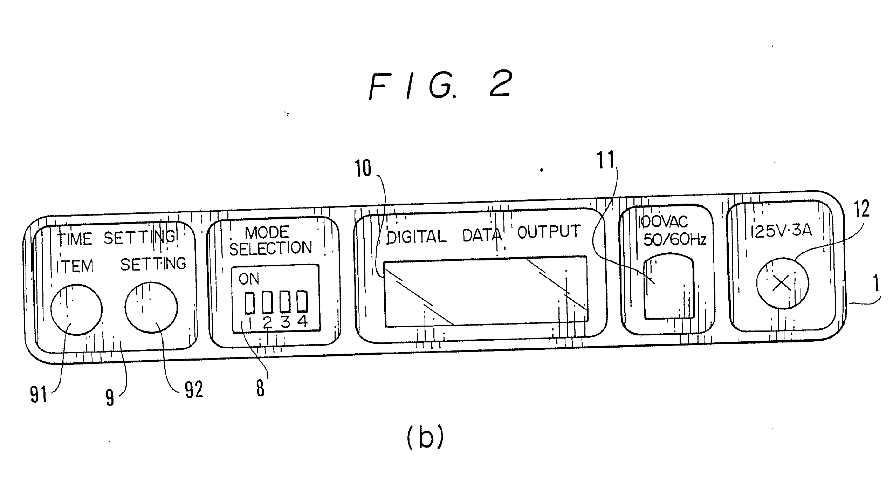

Fig. 2 (a) is the front view of the embodiment of the printer-equipped electronic clinical thermometer. The front of enclosure 1 provides the data display parts and the temperature sensing probe connectors, etc. In the Fig., 2 is the power ON/OFF switch. As temperature measurement channels, the deep temperature channels A and B, and the surface temperature channels A and B are provided. 41 and 42 are deep temperature probe connectors for channels A and B; 43 and 44 are surface temperature probe connectors for channels A and B. Display portions are prepared for channels A and B. 31 and 35 are temperature display LED for channel A and B; 32 and 36 are LED displays which show that the deep temperature is being displayed in 31 and 35; 33 and 37 are LED displays which show that channel A and B surface temperatures are being displayed in 31 and 35; 34 and 38 are selection switches for display temperature of channel A or B.

Fig. 2 (b) is the rear view of the embodiment. In Fig. 2 (b), 8 is the record mode selection switches which decide whether or not to separate the print charts at the 24:00 hour point; 9 is the time-setting switches which set the time

-7-

0314789

function internal to the unit; 10 is a 14-pin connector which outputs digital measurement data to outside equipment through a centronic interface (this interface is presented by centronics corporation in U.S.); 11 is the 100VAC input power connector; and 12 is a fuse holder.

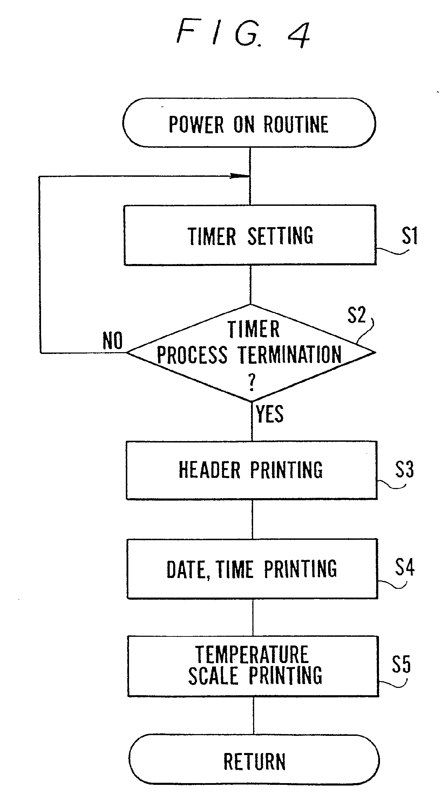

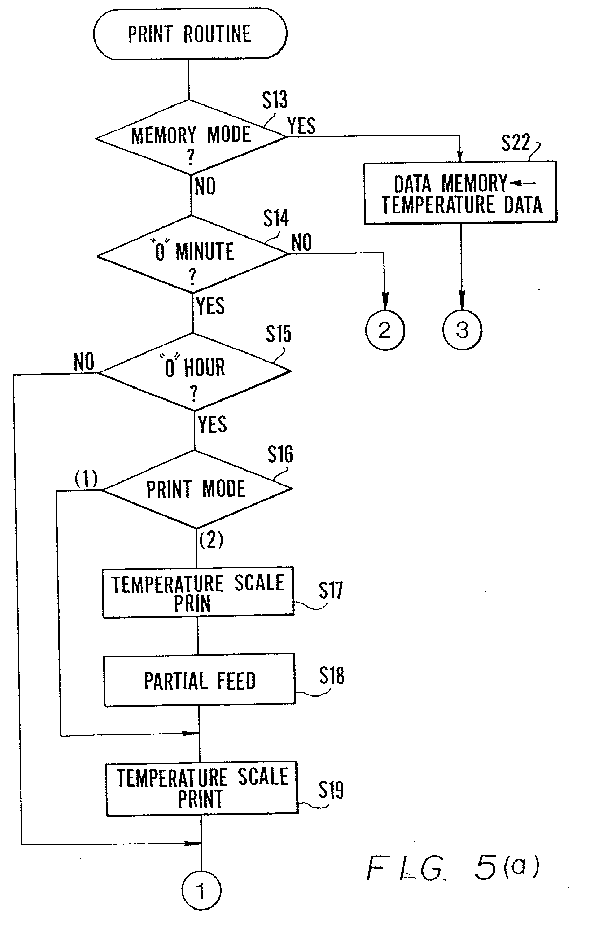

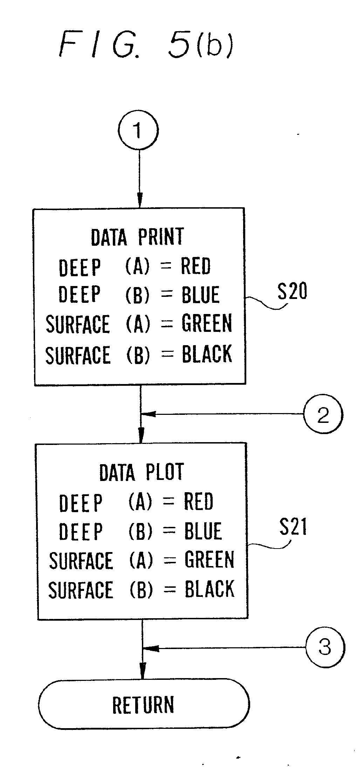

Figs. 3 (a) and (b) are a block diagram which shows the basic structure of the embodiment of a printer-equipped electronic clinical thermometer. In these drawings, 100 is the central processing unit (CPU) which processes the data; 101 is a read-only memory (ROM) which stores the control program, etc. (Fig. 4, Figs. 5 (a) and (b)) for execution by control CPU 100; 102 is a random access memory (RAM) which temporarily stores the body temperature measurement data to treat it as recording data; 103 is a realtime clock circuit which is used to form the time information; P112 is a sample of an internal temperature probe; 104 is an analog/digital conversion circuit which converts the analog temperature signals which are detected by the temperature probe 112; 105 is a constant current source which supplies constant current to the thermistor socket of the deep temperature probe P112; 106 is a heater drive circuit which provides drive to only the heater in the deep temperature probe P112; 300 is a measurement circuit which selects and inputs the detected analog temperature signal (not shown) from the 4 measurement channels; 200 is an operation section which consists of various kinds of operational switches; 107 is the LED drive circuits of the LED display 3; 108 is the printer drive circuit for printer 6; 109 is a digital output circuit to externally

-8-

connected equipment; 110 is the common bus for CPU 100; and 111 is the DC power supply.

In this structure, the thermistor deep temperature probe P112 is constant current-driven by the constant current source 105 and the resistance value changes are converted to voltage changes corresponding to the detected temperature. This voltage is converted from analog to digital by the A/D conversion circuit 104. The converted signal becomes temperature data and is read into CPU 100. Each temperature reading time is determined by the realtime clock circuit 103. This realtime clock circuit 103 generates timing signal t, for example every second, and an interrupt to CPU 100 is initiated. CPU 100 has time register 112 in RAM 102, as explained previously. When there is an interrupt, the time register 112 renews the (hour) (minute) (second) time data. Also when this renewal passes 24:00 hour, the month and day (month) (day) data is renewed. The starting set of this type of time register 112 is carried out by the above-explained time-setting switch 9. As explained previously, an interrupt every second is also used for timing which causes the CPU 100 to sample the input temperature data of the temperature sensing probe. Input temperature data is displayed on display LEDs 31 and 35 once every second and is plotted on recording paper 7 once every minute.

The following explanation of the operation of the embodiment is based on the flowcharts.

Fig. 4 is the power-on process routine flowchart of the embodiment. Figs. 5 (a) and (b) are the print process routine flowchart of the embodiment. Fig. 6 is a drawing showing a sample of the printout of the measurement data which is gathered in a thermostatic bath.

Usually, when the power is turned ON, the process routine of Fig. 4 is entered. In step S1, the operator sets the current time information. When the item switch 91 shown in Fig. 2 is pushed, it always goes into the time-setting mode where the time-setting switch 92 is used to set the time in the time register 112. At this time, the contents of the time register can be confirmed by display LEDs 31 and 35. If in step S2, the time-setting process is determined to be completed, in step S3, the headers required in the measurement are printed. This header is printed to show that the start of measurement is established. For example as in Fig. 6,

"==TEMPERATURE DATA==" is first printed. This type of print is previously stored in ROM 101 as fixed header pattern data "==TEMPERATURE DATA==" and is read out synchronously with the print head horizontal movement. Each time this print head prints one dot line data readout from the head of the header pattern data, the CPU progresses one dot line at a time reading out a line at a time of the header pattern data to recording paper 7. This process is repeated at each dot line for a fixed number of times. In the same manner, the next fixed pattern data "NAME AGE" is printed. Later, the user can enter the name and age in the space provided. In step S4, the present date and time which are read out from the time register 112 can be printed. For this type of printing, the same method as

-10-

described above can be used for the data from time register 112, date and time coded data. By referring to the font file which is already stored in ROM 101, the corresponding pattern data is read out. In step S5, the first temperature scale is printed: for example, temperature range from 20°C to 40°C. In ROM 101, the corresponding dot pattern image of several measurement temperature ranges are assembled. Therefore, to obtain detailed measurement for a narrower temperature range, the corresponding temperature scale dot pattern image can be selected and the output enlarged on recording paper 7.

Although not shown in a drawing, CPU 100 samples the output of all temperature data according to the time interrupt which occurs every second, each time displaying the measurement temperature on LEDs 31 and 35. But when the time register 112 renews the minute input, the print process routine shown in Fig. 5 (a) and (b) is performed. Step S13 checks if the unit is in memory mode or not. As explained previously, the memory mode is changed by the memory switch 51. When it is not in memory mode, if the memory mode switch 51 is pushed, it goes into memory mode, causing realtime printing to stop. As will be explained later, instead of printing it moves into print data memory mode. When it is determined in step S13 that it is in memory mode, the accumulated temperature data (one dot line graph printed data portion) is stored in the data memory 113 of RAM 102 in step S22. This is for the purpose of printing after it is gathered. In this manner, the device will not be noisy even during late night measurement.

When not in memory mode as determined by step S13, check to determine if the time register 112 is at "0 minutes" or not in step S14. That is, determine whether or not the time has been renewed or not. If it is not at "0 minute," it will be at "n minutes 0 seconds". The process proceeds to step S21 and plots the dots representing each temperature data. That is, for example, if the temperature data is $25^{\circ}C$, it performs the pattern change necessary to print the dot on the position of the selected temperature scale at the $25^{\circ}C$ position. At this time, for example, deep temperature A is plotted in red, deep temperature B in blue, surface temperature A in green, and surface temperature B in black. Also, the time axis is plotted. That is, within this one dot line of stored data is included the dot pattern forming the time scale (for example, one dot each around $20^{\circ}C$ and $40^{\circ}C$). However, temperatures less than $20^{\circ}C$ and over $40^{\circ}C$ are not plotted. The row axis represents temperature and the column axis represents time. The temperature is plotted every minute using the respective color allotted to each temperature. According to this embodiment, since the printer and the main body are incorporated in a single unit, it is easy to assign each separate sensor temperature channel to a plot pen with a corresponding color, thus obviating tedious and complex work. When it is "0 minutes" in Step S14, Step S15 checks whether or not it is at "0 hours", i.e., determines whether the date has been updated. If it is not at "0 hours", it will be "n hours 0 minutes". The control proceeds to Step S20 and prints all temperatures as a numerical value. Deep temperature A is

-12-

printed in red, deep temperature B in blue, surface temperature A in green, and surface temperature B in black. By this arrangement, the precision of the readout temperature data and trend graph are increased. However, data less than $-5^{\circ}C$ and more than $55^{\circ}C$ are not printed. Numeric printing of the temperature at each "n hour 0 minutes" is performed in such manner that the temperature data at "n hour 0 minutes" is maintained for 10 minutes in form of code data, and the code data is converted into pattern data by accessing the ROM 101 for each dot line of data and the generated pattern is printed beside the temperature data in the course of plotting the temperature data of the following period from "n hour 1 minute" to "n hour 10 minutes". Thus the printing of numeric temperature data for each "0 minutes" is completed at the time temperature is measured at the 10th minute of every hour.

At the same time, on the time axis 71, a line graph pattern 72 at every hour and time pattern 73 is printed to show time. In this manner, as an additional benefit, because time of day information is printed on the time axis 71, the reliability of temperature data readout with regard to time is increased. In this section, the temperature data is plotted in step S21. In the same manner, on the temperature axis 74 temperature calibration marks 75 are also provided, in a form of line graph pattern, for 1 degree intervals and a numerical scale 76 at 5 degree intervals.

When in step S15 it is determined that it is "0 hours", this represents the end of a day. In step S16, print mode is checked. Print mode is set by the mode change switch 8 of Fig.

2 (b). Mode (1) does not separate the temperature graph into 24-hour portions. The program flow goes to step S19, and prints the temperature scale for the end of the day. This also acts as the temperature scale for the next day. In this manner, when in mode (1) the temperature graph continues for more than 24 hours. On the other hand, mode (2) separates the temperature graph into 24-hour portions. The program flow goes to step S17 first and prints one day's temperature scale. In step S18, the paper is fed a pre-determined length to separate the graphs. In this manner, the next days' graph is separated and starts anew from "0 hours". Accordingly, in mode (2), the graphs are separated after one cycle, and can then be cut and pasted on a notebook, thus making for more efficient data control.

Figs. 7 (a) and (b) show an example of the measurement process according to the embodiment of the present invention. Fig. 7 (a) shows an example of a realtime printout of temperature data, etc., in which it is recorded on record paper 7, and at the same time creation of a one dot line pattern data. But when the memory mode switch 51 is pushed, realtime printing stops, and recording data is stored in the data memory 113 in RAM 102. That is, after printing one dot line of data A as in Fig. 7 (a), if the memory mode switch 51 is pushed, printing stops and from the next dot line of data B, the data is stored from the first memory location of the data memory 113 as shown in Fig. 7 (b). For this reason, data memory 113 can specify an optional one bit position on co-ordinates of bit address X and bit address Y. In this case, for example, the largest value of bit address X corresponds to the capacity which can be stored in bit data of the largest print width (largest printed dot count), and the largest value of bit address Y corresponds to the capacity which can be stored in bit data of the temperature data (1 dot per minute graphic display), for example, for 12 hours. Therefore, the pattern data in Fig. 7 (b) is formed in data memory 113 in the same manner as recorded data is printed. The data memory is filled in 12 hours. If CPU 100 detects this condition, it returns to the starting point and reads out the data memory 113, thus printing Fig. 7 (a). After printing, since data memory 113 has been emptied, CPU 100 returns to the writein starting point of data memory 113 and continues to store temperature data for the next 12 hour portion.

## EFFECT OF THE INVENTION

As explained above, this invention can generate recording data for a temperature scale corresponding to a measurement range, recording data for a measurement time scale from the starting time of measurement, and also form recording data of temperature data dots generated by the temperature measurement means on the corresponding position of the co-ordinates specified by the above recording data composed of the measurement time scale and temperature scale and these formed recording data are printed according to a given sequence. The user can therefore easily grasp the process of measurement of the temperature of a living body.

Also, because the digital printer and electronic clinical thermometer are combined into a single unit, the influence of changes of offset electric potential is prevented, increasing electronic reliability and improving space utilization. The invention can present measurement progress data, and supplementary benefits can be provided in the output.

WHAT IS CLAIMED IS

1.  An electronic clinical thermometer equipped with a printer comprising:

a temperature measurement means for detecting living body temperature data;

a first recording data producing means for producing temperature scale data over the measurement range which is covered by the temperature measurement means;

a second recording data producing means for producing time scale based on the measurement time which begins at the measurement starting time;

a third recording data producing means for producing temperature data by dots generated by said temperature measurement means;

plotting means for plotting the generated temperature on coordinates specified by the measurement time scale and temperature scale; and

recording means for printing at least above-mentioned three data in a given sequence.

2.  An electronic clinical thermometer equipped with a printer as claimed in claim 1, further comprising:

recording data generating means which generates temperature data in a form of numerical data, whereby the generated temperature data is periodically printed.

3. An electronic clinical thermometer as claimed in claim 1, further comprising:

memory means for storaging therein data of the measurement time scale, temperature scale and measurement temperature; and

control means to determine the time of printing out the data storaged in the memory, whereby at least the above three data are printed together when a given time elapses from memory starting time thereof.

0314789

FIG. 1

# F I G. 2

(a)

# FIG. 2

TIME SETTING
ITEM    SETTING

MODE
SELECTION

ON
1 2 3 4

DIGITAL  DATA  OUTPUT

100VAC
50/60Hz

125V·3A

10   11   12   1

91   9   92   8

(b)

0314789

F I G. 3(a)

FIG. 3(b)

# FIG. 4

POWER ON ROUTINE

TIMER SETTING — S1

TIMER PROCESS TERMINATION ? — S2

NO

YES

HEADER PRINTING — S3

DATE, TIME PRINTING — S4

TEMPERATURE SCALE PRINTING — S5

RETURN

```
                    ┌─────────────────┐
                    │  PRINT ROUTINE  │
                    └────────┬────────┘
                             │
                        S13  │
                    ╱◇╲──────┴──────╲     YES        ┌──────────S22────┐
                  ◇  MEMORY MODE  ◇──────────────────►│ DATA MEMORY ←   │
                    ╲    ?      ╱                      │ TEMPERATURE DATA│
                      ╲───┬───╱                       └────────┬────────┘
                         NO│                                   │
                      S14  │                                   │
                    ╱◇╲────┴────╲     NO                       │
                  ◇  "0" MINUTE  ◇──────────┐                  │
                    ╲    ?    ╱             │                  │
                      ╲──┬──╱               │                  │
                       YES│                 ▼                  ▼
                      S15  │               (2)                (3)
           NO       ╱◇╲────┴────╲
     ┌─────────────◇   "0" HOUR  ◇
     │              ╲    ?    ╱
     │                ╲──┬──╱
     │                 YES│
     │              S16  │
     │  (1)       ╱◇╲────┴────╲
     │ ┌─────────◇  PRINT MODE  ◇
     │ │          ╲         ╱
     │ │            ╲──┬──╱
     │ │             (2)│
     │ │      ┌─────────┴────────┐
     │ │      │TEMPERATURE SCALE │ S17
     │ │      │     PRIN         │
     │ │      └─────────┬────────┘
     │ │                │
     │ │      ┌─────────┴────────┐
     │ │      │  PARTIAL FEED    │ S18
     │ │      └─────────┬────────┘
     │ └────────────────┤
     │        ┌─────────┴────────┐
     │        │TEMPERATURE SCALE │ S19
     │        │     PRINT        │
     │        └─────────┬────────┘
     └──────────────────┤
                        ▼
                       (1)
```

F L G. 5 (a)

# F I G. 5(b)

① ↓

```
    DATA  PRINT
  DEEP    (A) = RED
  DEEP    (B) = BLUE
  SURFACE (A) = GREEN
  SURFACE (B) = BLACK
```
S20

② →

```
    DATA  PLOT
  DEEP    (A) = RED
  DEEP    (B) = BLUE
  SURFACE (A) = GREEN
  SURFACE (B) = BLACK
```
S21

③ →

RETURN

0314789

# F I G. 6

=== TEMPERATURE DATA ===

NAME          AGE
84/07/30      09:56

**7**

**TEMPERATUR SCALE**
20~40℃

| | | | |
|---|---|---|---|
| 10 | 25.4 | 26.2 | 44.9 | 23.9 |
| 11 | 25.4 | 26.3 | 44.9 | 24.0 |
| 12 | 25.1 | 26.0 | 44.9 | 23.8 |
| 13 | 26.4 | 26.6 | 44.9 | 24.6 |
| 14 | 25.4 | 26.6 | 44.9 | 24.2 |

**TIME SCALE**

**DEEP(A)**
**DEEP(B)**

**SURFACE (A)**
**SURFACE (B)**

| | | | |
|---|---|---|---|
| 23 | 26.4 | 26.2 | 44.9 | 25.8 |
| 00 | | | | |

20   25   30   35   40

20   25   30   35   40
0

1

# F I G. 7

=== TEMPERATURE DATA ===

NAME         AGE

84/07/30      09:56

7

```
  20        25         30        35        40
10 25.4        26.2     44.9      23.9
```

A

## (a)

→ X

B

```
11  25.4        26.3      44.9         24.0
```

Y

113

## (b)

0314789

# INTERNATIONAL SEARCH REPORT

International Application No  PCT/JP87/00513

| I. CLASSIFICATION OF SUBJECT MATTER (if several classification symbols apply, indicate all) 3 |
|---|
| According to International Patent Classification (IPC) or to both National Classification and IPC |

Int.Cl⁴   G01K1/02, 7/00, G01D9/08

## II. FIELDS SEARCHED

Minimum Documentation Searched +

| Classification System : | Classification Symbols |
|---|---|
| IPC | G01K1/02, 7/00, G01D9/08 |

Documentation Searched other than Minimum Documentation
to the Extent that such Documents are Included in the Fields Searched 5

Kokai Jitsuyo Shinan Koho        1971 - 1987

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, U, 60-179940 (NEC Corporation) 29 November 1985 (29. 11. 85) (Family: none) | 1-3 |
| Y | JP, A, 61-118615 (Digital Engineering Kabushiki Kaisha) 5 June 1986 (05. 06. 86) (Family: none) | 2-3 |

* Special categories of cited documents: 15

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the·same patent family

## IV. CERTIFICATION

| Date of the Actual Completion of the International Search 2 | Date of Mailing of this International Search Report 2 |
|---|---|
| September 21, 1987 (21. 09. 87) | October 5, 1987 (05. 10. 87) |
| International Searching Authority 1 | Signature of Authorized Officer 20 |
| Japanese Patent Office | |

Form PCT/ISA/210 (second sheet) (October 1977)